# EUROPÄISCHE PATENTSCHRIFT

(11) **EP 3 284 360 B1**
(45) Veröffentlichungstag und Bekanntmachung des Hinweises auf die Patenterteilung: **26.09.2018**
(21) Anmeldenummer: 16184213.3
(22) Anmeldetag: 15.08.2016
(51) Int. Cl.: A42B 3/18, G02C 3/04, A42B 3/04

(54) **MAGNETISCH WIRKENDE HAFTHALTERUNG UND MAGNET-SET ZUR BRILLENBEFESTIGUNG, SOWIE VERWENDUNG DES SETS UND FAHRRADHELM**
MAGNETIC HOLDER SUPPORT AND MAGNET SET FOR SPECTACLE FIXING, AND USE OF THE SETS AND HELMET FOR CYCLIST
VENTOUSE A ACTION MAGNETIQUE ET ENSEMBLE D'AIMANTS DESTINE A FIXER DES LUNETTES ET UTILISATION DE L'ENSEMBLE ET CASQUE DE VELO

(43) Veröffentlichungstag der Anmeldung: 21.02.2018
(73) Patentinhaber: Grubert, Felix, 79111 Freiburg (DE)
(72) Erfinder: Grubert, Felix, 79111 Freiburg (DE)
(74) Vertreter: Klocke, Peter

(56) Entgegenhaltungen:
- EP-A1- 2 305 053
- EP-A1- 2 425 729
- WO-A1-2005/050288
- WO-A1-2015/183171
- WO-A1-2016/003050
- CN-U- 204 335 934
- KR-A- 20150 146 014
- US-A1- 2006 055 866
- US-A1- 2006 055 869
- US-A1- 2015 234 201
- US-B1- 6 168 273

## Beschreibung

Die Erfindung betrifft eine Hafthalterung zum temporären Befestigen einer Brille an einem Objekt, mit mindestens einem an einem Brillenohrbügel eines Brillengestells anbringbaren Brillenhalteteil, das magnetisches und/oder magnetisierbares Material aufweist und das bei einem magnetischen und/oder magnetisierbaren Objekt eine direkte lösbare Fixierung der Brille oder bei einem beliebigen Material des Objektes eine indirekte Fixierung über mindestens ein an dem Objekt befestigbares Objekthalterungsteil, das magnetisches und/oder magnetisierbares Material aufweist, ermöglicht, wobei die Materialpaarung derart gewählt ist, dass zwischen dem Brillenhalteteil und dem Objekt oder dem am Objekt befestigten Brillenhalteteil und dem Objekthalterungsteil eine Magnetkraft wirkt.
Die Erfindung betrifft weiterhin ein Magnet-Set zur Brillenbefestigung an einem beliebigen Objekt, mit der vorstehend beschriebenen Hafthalterung. Die Erfindung betrifft zudem die Verwendung dieses Magnet-Sets sowie einen Fahrradhelm mit einem solchen Magnet-Set.
In vielen Bereichen des täglichen Lebens, beispielsweise beim Fahrradfahren oder Autofahren, werden oft Sonnenbrillen als Lichtschutz für die Augen getragen. Derartige Schutzbrillen weisen üblicherweise getönte Brillengläser auf, die die Lichtdurchlässigkeit zu den Augen des Trägers verringern. Bei sich häufig ändernden Lichtverhältnissen werden solche Brillen in der Regel wiederholt auf- und abgesetzt. Dabei ist es angenehm und wünschenswert, die abgesetzte Sonnenbrille griffbereit in der Reichweite des Fahrers derart lagegesichert zu verwahren, dass die Brille schnell abgelegt und aufgenommen werden kann, ohne dass der Fahrer dabei im Bedarfsfall größere Konzentration und Aufmerksamkeit aufwenden muss. Insbesondere beim Radsport kann es auch erforderlich sein, dass ungetönte und getönte Brillen, je nach den Sichtverhältnissen, abwechselnd zu verwenden. Dazu fehlt es aber in der Regel mangels einer Ablage an einer schnellen Wechselbarkeit.

Zum Stand der Technik für magnetische Brillenhalterungen wird beispielhaft auf die Druckschrift DE 71 16 431 U verwiesen. Dieses Gebrauchsmuster offenbart einen Haltevorrichtung für Brillen, mit einem an bzw. in dem Brillengestell angeordneten Magneten oder magnetisierbaren Körper, der im Zusammenwirken mit einem magnetisierbaren Körper oder der im Zusammenwirken mit einem Magneten ein Festlegen der Brille ermöglicht. Der Magnet oder der magnetisierbare Körper ist mittels einer Klemmvorrichtung an dem Brillengestell festlegbar. Dem Magneten ist eine an einem Objekt befestigbare Haltevorrichtung zugordnet, die aus einem Kunststoffkörper besteht und der eine Ausnehmung zur Aufnahme des Magneten aufweist, wobei in der Ausnehmung ein magnetischen Platte angeordnet ist. Der für das Brillengestell vorgesehene Magnet oder magnetisierbare Körper ist an dem bzw. in dem Nasenbügel der Brille angeordnet. Dies hat den Nachteil, dass die Brille mit an den Gläserfassungen anliegenden Brillenohrbügeln befestigt werden muss und dass dabei die Brillengläser mit dem Objekt, an dem die Haltevorrichtung befestigt ist, in Kontakt kommen kann und so die Gläser der Brille verkratzt werden können.

Zum Stand der Technik wird noch auf die Druckschriften US 2006/0055869 A1 und US 6,168,276 B1 verwiesen.

Die Offenlegungsschrift US 2006/0055869 A1 offenbart eine Magnetklammer für eine Brille, die einen rechten und einen linken Brillenbügel aufweist, die schwenkbar an einem Brillengestellkörper angebracht sind. Die Magnetklammer ist lösbar mit der Brille verbindbar und umfasst zwei identisch ausgebildete Klammerteile, von den je eines für einen der Brillenbügel vorgesehen ist. Jedes Klammerteil weist einen Klammerkörper aus einem elastomeren Material mit einem darin aufgenommenen Magneten auf, wobei sich ein Durchführungskanal durch einen Abschnitt jedes Klammerkörpers erstreckt, der zur Aufnahme des Brillenbügels vorgesehen ist. Der Durchführungskanal ist so konfiguriert, dass der Bügelbügel den Kanal aufweitend hindurchgleiten kann. Die beiden Klammerteile wirken an der Brille angebracht zusammen, wenn die beiden Brillenbügel eingeklappt sind, indem die beiden Magneten sich dann bedingt durch ihre Magnetkraft anziehen, damit in Anlage aneinander gebracht und so gehalten werden. Die Magnetkraft wirkt auch durch dünnes Material von Kleidungsstücken hindurch, wenn ein Abschnitt des Kleidungstückes zwischen die Brillenbügel geführt wird. Die Magnetklammer stellt eine kraftschlüssige Verbindung mit dem Kleidungsabschnitt her und verhindert dadurch eine unerwünschte Relativbewegung der Brille gegenüber dem Kleidungsstück.

Die Patentschrift US 6,168,276 B1 lehrt eine magnetische Haltevorrichtung, insbesondere für eine Brille mit einem Brillengestell, das zwei Gläserfassungen und zwei gelenkig mit den Gläserfassungen verbundene Ohrbügel aufweist. Die Haltevorrichtung besteht zumindest aus zwei Vorrichtungsteilen, von denen je eines für die gelenknahe Anordnung an den Gläserfassungen oder den Ohrbügeln bestimmt ist. Die Vorrichtungsteile weisen einen Magneten auf, der direkt mit einem magnetischen oder magnetisierbaren Objekt, oder über ein entsprechendes an einem nicht magnetisierten oder magnetisierbaren Objekt befestigbares Gegenstück oder indirekt über ein derartiges Gegenstück auch bei einem magnetischen oder magnetisierbaren Objekt zusammenwirkt, und die Brille dabei durch Magnetkraft dort lösbar festlegt. Der Magnete können dabei auf beliebige Art mit dem Brillengestell verbunden sein, beispielsweise in dieses eingespritzt, mit diesem verklebt, verstiftet, verschraubt, oder in sonstiger Weise haftend befestigt sein.

Ausgehend von diesem Stand der Technik liegt der Erfindung die Aufgabe zugrunde, eine Möglichkeit vorzuschlagen, bei der die Brille im Gebrauchszustand bei unterschiedlich angeordneten Flächen von verschiedenen Objekten auf diesen abgelegt werden kann und ein Kontakt der Brillengläser mit dem Objekt sicher vermieden wird.

Diese Aufgabe wird erfindungsgemäß durch eine magnetisch wirkende Hafthalterung mit den Merkmalen des unabhängigen Anspruchs 1 sowie mit einem Magnet-Set mit den Merkmalen des diesem nebengeordnete Anspruchs 4 gelöst. Weitere vorteilhafte Ausführungsformen sind den jeweils rückbezogenen Ansprüchen zu entnehmen.

Danach ist bei der erfindungsgemäßen Hafthalterung zum temporären Befestigen einer Brille an einem Objekt, das mindestens eine Brillenhalteteil als Elastomer-Formteil ausgebildet. Das jeweilige Brillenhalteteil ist an einem Brillengestell anbringbar. Es weist magnetisches und/oder magnetisierbares Material auf und ermöglicht bei einem magnetischen und/oder magnetisierbaren Objekt eine direkte lösbare Fixierung der Brille oder bei einem anderen Material des Objektes eine indirekte Fixierung über mindestens ein an dem Objekt befestigbares Objekthalterungsteil, das magnetisches und/oder magnetisierbares Material aufweist. Dabei ist die Materialpaarung derart gewählt, dass zwischen dem Brillenhalteteil und dem Objekt oder dem Brillenhalteteil und dem Objekthalterungsteil eine Magnetkraft wirkt, die derart bemessen ist, dass die Brille sicher gehalten wird. Es ist klar, dass mit zwei oder mehr an der Brille angebrachten Brillenhalteteil die magnetische Haltekraft vergrößert wird und zudem auch die Brille in ihrer räumlichen Lage zunehmend stabilisiert wird. Das als Elastomer-Formteil ausgebildete Brillenhalteteil ist elastisch und kann sich an die Form des Brillengestells, beispielsweise der Gläserfassungen, des Nasenbügels oder der Ohrbügeln gut anpassen und liegt somit lagestabil daran an. Es ist vorzugweise in seiner Form an den vorgesehenen Anbringungsort angepasst. Es kann beispielsweise form-, kraft- oder stoffschlüssig, lösbar oder unlösbar, mit dem Brillengestell verbunden werden. Die Befestigung daran ist sicher, und löst sich auch nicht ungewollt bei großer Hitze oder bei Regen. Das Elastomer-Formteil ist beispielsweise aus Silikon hergestellt. Das mindestens eine Brillenhalteteil ist einfach auf einen Brillenohrbügel spannend aufschiebbar. Bevorzugt wird eine Positionierung nahe dem die Gläserfassung und den Ohrbügel verbindenden Gelenken des Brillengestells.

Erfindungsgemäß weist das Brillenhalteteil dabei einen rohrförmigen Aufnahmeabschnitt für den Brillenohrbügel, d.h. eine Art zylindrische Aufnahmetülle, und einen formstabilen Anlageabschnitt für das Objekt oder das am Objekt befestigte Objekthalterungsteil auf. Die tüllenförmige Aufnahme für die Brillenohrbügel kann mit einer beliebigen Querschnittsform ausgebildet sein, z.B. rund, konisch, rechteckig, quadratisch oder dergleichen. Sie kann auf den Ohrbügel elastischformschlüssig aufgeschoben werden. Es sind dabei günstigerweise Brillenhalteteile mit unterschiedlich geformten Aufnahmeabschnitten vorgesehen, d.h. verschiedene Versionen mit engerem oder weiterem Tüllendurchmesser, um dicke und dünne Brillenbügel abzudecken. Mit dem formstabilen Anlageabschnitt stützt sich das Brillenhalteteil bei einer direkten lösbaren Fixierung der Brille an dem Objekt oder bei einer indirekten Fixierung der Brille an dem Objekt befestigten Objekthalterungsteil ab. Die Anlage daran ist vorzugsweise zumindest linienförmig. Als besonders günstig hat sich eine flächige Anlage erwiesen. Für den Fall, dass das magnetische oder magnetisierbare Material des Brillenhalteteils zu einem Festkörper geformt ist, ist dieser in dem Anlageabschnitt des Elastomer-Formteils aufgenommen.
Um eine Ablage der Brille insbesondere bei zueinander schräg stehenden Flächen zu ermöglichen, ist es erforderlich, entweder den Anlageabschnitt gegenüber dem Aufnahmeabschnitt an der Brille oder an dem Objekthalterungsteil einen Halteabschnitt, der mit dem Aufnahmeabschnitt an der Brille in Kontakt gebracht wird, gegenüber einem Befestigung Abschnitt mit dem das Objekthalterungsteil an einem Objekt befestigbar ist, flexibel auszugestalten. Dazu ist bei der erfindungsgemäßen Hafthalterung zudem vorgesehen, dass der Aufnahmeabschnitt und der Anlageabschnitt miteinander über einen dazwischen verlaufenden flexiblen Verbindungsabschnitt einander gegenüber schwenkbar verbunden sind. Dabei ist der Verbindungsabschnitt vorzugsweise dünner als der Aufnahmeabschnitt und der Anlageabschnitt ausgebildet. Der Verbindungsabschnitt verbindet den Aufnahmeabschnitt und den Anlageabschnitt flexibel miteinander. Er ist in allen Richtungen elastisch verformbar und kann gedehnt, gestaucht, gekickt, gebogen oder verdreht werden. Die jeweilige Verformung erfolgt durch die Magnetkraft, die zwischen dem Brillenhalteteil und dem Objekt oder zwischen diesem und dem am Objekt angebrachten Objekthalterungsteil wirkt. Durch diese Kraft passt sich der Verbindungsabschnitt in seiner räumlichen Lage an die Form des Objektes an, wenn dieses beispielsweise eine unebene, wellige oder gebogenen Befestigungsfläche besitzt. Anstelle eines dünneren Verbindungsabschnittes kann auch ein Verbindungsabschnitt aus einem weicheren Material verwendet werde. Dieser kann beispielsweise an den Aufnahmeabschnitt und/oder den Anlageabschnitt angespritzt oder mit diesem verklebt sein.

Die erfindungsgemäße Hafthalterung ist primär für die Anwendung beim Fahrradfahren vorgesehen. Weitere potenzielle Anwendungsgebiete sind alle Sportarten, bei denen ein Helm getragen wird. Dies sind beispielsweise Ski-Fahren, Klettern und Boot-Fahren, z.B. Kajak oder Rafting. Die vorgeschlagene Hafthalterung kann natürlich für alle Brillenarten verwendet werden, d.h. nicht nur für Schutzbrillen gegen Licht (Sonnenbrillen) sondern auch für Schutzbrillen gegen Schmutz und Insekten oder normale Sichtbrillen zum Ausgleich von Sehschwächen. Das Aufsetzen, Absetzen oder Wechseln der Brille erfolgt entsprechend wegen wechselnder Lichtverhältnisse, wegen Beschlagen oder Verschmutzung der Brille, sowie der Notwendigkeit Schweiß im Gesicht abzuwischen. Häufig hat der Benutzer der Brille dabei nur eine Hand zur Verfügung, um die Brille aufzunehmen und aufzusetzen bzw. abzusetzen und abzulegen. Diese Tätigkeiten sind beispielhaft beim Radfahren, bei hoher Geschwindigkeit oder schwierigem Gelände gefährlich und unsicher. Gleiches gilt beim Ski-Fahren und Klettern. Somit ist es in all diesen Fällen vorteilhaft und eigentlich auch notwendig, die Brille "blind" an dem jeweiligen Objekt, wie z.B. an dem Helm, an der Kleidung, dem Sportgerät oder dgl., einfach und sicher zu befestigen oder von diesem zu lösen, d.h. ohne abgelenkt zu werden bzw. einen Blick darauf zu werfen. Die Erfindung erleichtert dies extrem, da selbst bei ungenauer Positionierung der Brille diese durch die Magnetkraft zwischen dem Brillenhalteteil und Objekt bzw. dem Brillenhalteteil und dem Objekthalterungsteil selbst ausgerichtet und hingezogen wird. Dies funktioniert selbst ungeübt, einhändig und sofort.
Bei einer Ausführungsform der erfindungsgemäßen Hafthalterung ist das magnetische oder magnetisierbare Material des Brillenhalteteils homogen verteilt in dem Anlageabschnitt des Elastomer-Formteils eingebettet. Es ist beispielsweise pulverförmig in einer elastomeren Kunststoffmatrix aufgenommen. Die Matrix umgibt die Partikel aus magnetischem und/oder magnetisierbarem Material, das beispielsweise durch adhäsive oder kohäsive Kräfte an die Matrix gebunden ist. Derartige magnetische oder magnetisierbare Verbundwerkstoffe sind allgemein bekannt.

Bei einer Ausführungsform der erfindungsgemäßen Hafthalterung ist das magnetische oder magnetisierbare Material des Brillenhalteteils zu einem Festkörper geformt, der in dem Anlageabschnitt des Elastomer-Formteils aufgenommen ist. Der entsprechende Festkörper ist mit einem elastomeren Kunststoffwerkstoff umspritzt oder ist in einer in dem Elastomer-Formteil ausgebildeten Aufnahmetasche eingeführt.
Das erfindungsgemäße Magnet-Set zur Brillenbefestigung an einem beliebigen Objekt, weist mindestens ein Brillenhalteteil wie vorstehend beschrieben auf und mindestens ein an dem Objekt befestigbares Objekthalterungsteil. Das Objekthalterungsteil ist als Elastomer-Formgebilde ausgebildet und weist magnetisches oder magnetisierbares Material derart auf, dass zwischen dem Brillenhalteteil und dem Objekthalterungsteil eine Magnetkraft wirkt, die ein lösbares Festlegen der Brille an dem Objekt ermöglicht.

Dabei ist bei dem Elastomer-Formgebilde das magnetische oder magnetisierbare Material des Objekthalterungsteils entweder homogen verteilt in das Elastomer-Formgebilde eingebettet oder zu einem Festkörper geformt, der in dem Elastomer-Formgebilde aufgenommen ist. Das Elastomer-Formgebilde ist demnach entsprechend dem Elastomer-Formteil des Brillenhalteteils aufgebaut und ausgeführt. Es unterscheidet sich jedoch in der geometrischen Form. Die Gestalt des Elastomer-Formgebildes ist von der Form des Objektes abhängig, an dem die Brille temporär befestigt werden soll. Das Objekthalterungsteil ist der Form des Objektes angepasst. Da es aus elastischem Kunststoffmaterial hergestellt ist, kann es sich zumindest teilweise an die Form des Objektes anpassen, wenn es form-, kraft- oder formschlüssig mit diesem verbunden wird.

Vorzugsweise ist bei dem erfindungsgemäßen Magnet-Set das Objekthalterungsteil an dem Objekt festklebbar. Dazu kann das Elastomer-Formgebilde an der dem Objekt zugeordneten Seite eine Kleberbeschichtung aufweisen, oder es kann ein Doppelklebebandstreifen vorgesehen sein. Alternativ kann das Objekthalterungsteil auch derart ausgebildet sein, dass es über ein vorgesehenes Klettband befestigbar ist, wobei ein Teil des Klettbandes bei der Herstellung in das Elastomer-Formgebilde eingebracht werden kann. Damit kann das Objekthalterungsteil form- und reibschlüssig an einem stabförmigen Objekt befestigt und mit diesem verspannt werden.

Bevorzugt weist das Objekthalterungsteil einen Befestigungsabschnitt für das Objekt und einen Halteabschnitt für das Brillenhalteteil auf. Dessen ist insbesondere abhängig von der Form des Objektes und des Brillenhalteteils. Das Elastomer-Formgebilde ist bevorzugt eben, U-förmig oder schalenförmig oder Doppel-T-förmig ausgebildet. Dabei ist der Halteabschnitt speziell an die Geometrie des Anlageabschnittes des Brillenhalteteils und der Befestigungsabschnitt zumindest grob an die räumliche Geometrie des Objektes angepasst. Speziell das Doppel-T-förmig ausgebildete Elastomer-Formgebilde weist einen Verbindungsteg zwischen dem Befestigungsabschnitt für das Objekt und dem Halteabschnitt für das Brillenhalteteil auf. Dieser ist dünner ausgebildet als der Befestigungsabschnitt und der Halteabschnitt, sodass der Befestigungsabschnitt und der Halteabschnitt einander gegenüber schwenkbar verbunden sind.

Bei einer Ausführungsform der Erfindung weist das Magnet-Set mindestens zwei Brillenhalteteile und mindestens zwei, vorzugsweise zwei oder mehr weitere, identisch oder abweichend ausgebildete, Objekthalterungsteile auf. Die weiteren Objekthalterungsteile ermöglichen die Fixierung der Brille wahlweise an unterschiedlichen Objekten, wobei die Objekthalterungsteile an die verschiedenen Objekte angepasst sind.

Vorteilhafterweise weist das Magnet-Set mindestens ein zusätzliches mit dem Objekt verbindbares elastisches Stützpolsterteil für einen Nasenbügel und/oder eine Gläserfassung des Brillengestells auf. Daran kann sich die Brille zusätzlich abstützen und wird so in Ihrer Lage stabilisiert. Außerdem wird dabei sicher verhindert, dass die Gläser der Brille in Berührung mit dem Objekt kommen und möglicherweise dabei beschädigt werden. Falls notwendig, können neben einem großen Stützpolsterteil noch mehrere kleine Stützpolster zusätzlich verwendet werden, um das Klappern der Brille an dem Objekt zu vermeiden. Diese ermöglichen ein spielfreies Lagern der Brille am Helm. Solche Stützpolsterteile können beispielsweise auf einer Seite selbstklebend und auf der anderen Seite flauschig ausgebildet sein.

Günstigerweise weisen das Elastomer-Formteil, das Elastomer-Formgebilde und/oder das elastisch ausgebildete Stützpolsterteil aus eine typische Shorehärte zwischen 15 und 45 SHA, vorzugsweise von 20 bis 30 SHA, auf. Damit besitzen diese eine ausreichende Formbeständigkeit und eine gute Nachgiebigkeit, um die Brille sicher zu halten und sich dennoch an die Form des Objektes anpassen zu können.

Die erfindungsgemäße Hafthalterung sowie das erfindungsgemäße Magnet-Set zur temporären Befestigen einer Brille an einem Objekt, wie vorstehend beschrieben, sind vorzugsweise für die Verwendung in Verbindung mit einem Fahrradhelm und/oder einem Fahrradlenker vorgesehen.

Der erfindungsgemäße Fahrradhelm weist ein erfindungsgemäßes Magnet-Set, wie vorstehend beschrieben, zur temporären Befestigen einer Brille an dem Fahrradhelm auf. Durch die optional vorgesehenen weiteren Objekthalterungsteile und das mindestens eine zusätzliche Stützpolsterteil ist wechselweise auch die Befestigung der Brille an dem Fahrradlenker möglich. Damit wird dem Benutzer die Möglichkeit eingeräumt, zwei Brillen wechselweise zu verwenden ohne dass er anhalten muss, was insbesondere bei Wettbewerben und unterschiedlichen Lichtverhältnissen von Vorteil ist. Die zur Verfügung gestellten Objekthalterungsteile ermöglichen die Anbringung auf einem Helm, auf einem Rennradlenker und/oder einem Mountainbikelenker. Durch die zusätzlichen Stützpolsterteile, die auf die Vorbaukappe von verschiedenen Fahrradtypen (Rennrad oder Mountainbike) aufgebracht werden können, ist der erfindungsgemäße Fahrradhelm mit dem Magnet-Set vorteilhaft universell einsetzbar. Die Ausgestaltung der einzelnen Teile in verschiedenen Farben ermöglichen die Anpassung an die Brille, den Helm oder das sonstige Outfit des Benutzers. Durch eine extrem hohe Magnetfixierung sowie die adaptive Selbstausrichtung der Magneten zueinander können selbst starke Vibrationen oder Schläge die Brille nicht vom Helm bzw. Lenker trennen.

Nachfolgend wir die Erfindung anhand von in der Zeichnung dargestellten Ausführungsbeispielen näher erläutert. Weitere Merkmale der Erfindung ergeben sich aus der folgenden Beschreibung des Ausführungsbeispiels der Erfindung in Verbindung mit den beigefügten Zeichnungen. Die einzelnen Merkmale der Erfindung können für sich allein oder zu mehreren bei unterschiedlichen Ausführungsformen des erfindungsgemäßen Gegenstandes verwirklicht sein Es zeigen:
- Figur 1: eine erfindungsgemäße Hafthalterung zum temporären Befestigen einer Brille an einem Fahrradhelm, mit einem Brillenhalteteil und einem Objekthalterungsteil;
- Figur 2: eine erfindungsgemäße Hafthalterung zum temporären Befestigen einer Brille an einem Fahrradlenker, mit einem Brillenhalteteil, einem Objekthalterungsteil und einem Stützpolsterteil;
- Figur 3: das Brillenhalteteil aus Figur 1 und 2, in Stirnseitenansicht (Figur 3a), in Längsseitenansicht (Figur 3b), in Draufsicht (Figur 3c) und in Längsschnittdarstellung (Figur 3d);
- Figur 4: das Objekthalterungsteil aus Figur 1, in Draufsicht (Figur 4a), in Längsseitenansicht (Figur 4b), und in Querschnittsdarstellung (Figur 4c).
- Figur 5: das Objekthalterungsteil aus Figur 2, in Stirnseitenansicht (Figur 5a), in Draufsicht (Figur 5b) und in Längsschnittdarstellung (Figur 5c);
- Figur 6: das mit dem Objekthalterungsteil verbundene Brillenhalteteil aus Figur 1 und 2, in einer vergrößerten Darstellung in Stirnseitenansicht (Figur 6a) und in Längsseitenansicht (Figur 6b) und in perspektivischer Darstellung (Figur 6c);
- Figur 7: ein alternativ ausgebildetes Brillenhalteteil, in Stirnseitenansicht (Figur 7a), in Längsseitenansicht (Figur 7b), und in Längsschnittdarstellung (Figur 7c);
- Figur 8: ein alternativ ausgebildetes Objekthalterungsteil, in Stirnseitenansicht (Figur 8a), in Längsseitenansicht (Figur 8b), in Draufsicht (Figur 8c) und in Querschnittdarstellung (Figur 8d);
- Figur 9: das Stützpolsterteil aus Figur 2 in Draufsicht (Figur 9a) und in Querschnittdarstellung (Figur 8b);
- Figur 10: ein alternativ ausgebildetes Stützpolsterteil in Draufsicht (Figur 10a) und in Längsseitenansicht (Figur 10b); und

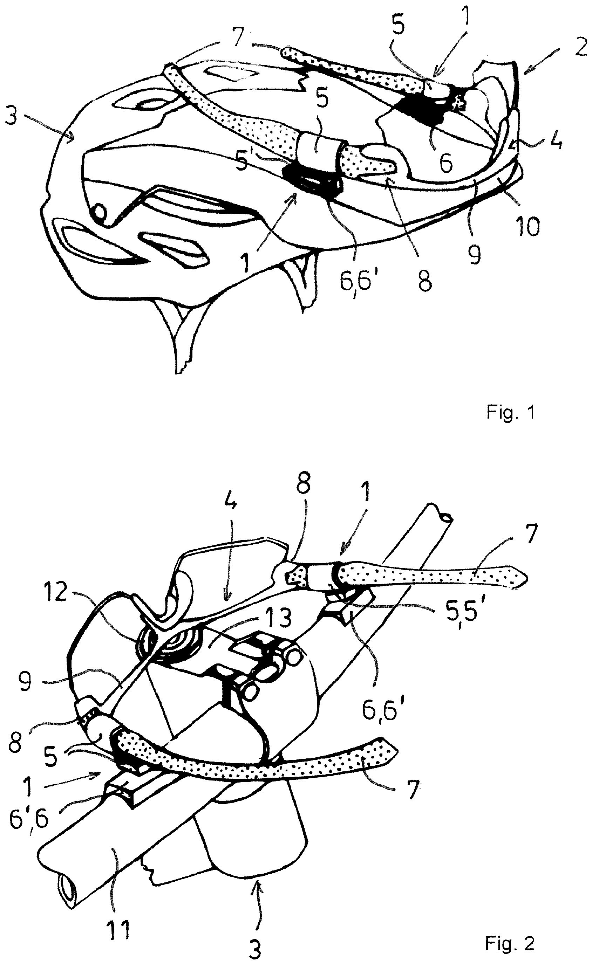

Die Figuren 1 und 2 zeigen in perspektivischer Darstellung eine erfindungsgemäße Hafthalterung 1 zum temporären Befestigen einer Brille 2 an einem Objekt 3, das in der Figur 1 ein Fahrradhelm und in der Figur 2 ein Fahrradlenker ist. Die Hafthalterung 1 weist zwei an einem Brillengestell 4 angebrachte Brillenhalteteile 5 auf, die magnetisch ausgebildet sind, und die eine indirekte Fixierung an dem jeweiligen Objekt 3 über jeweils ein an dem Objekt 3 befestigtes Objekthalterungsteil 6, das magnetisch oder magnetisierbar ausgebildet ist, ermöglicht. Die Brillenhalteteile 5 haften an den Objekthalterungsteilen 6 durch Magnetkraft. Die Brillenhalteteile 5 sind als Elastomer-Formteile 5' und Objekthalterungsteile 6 als Elastomer-Formgebilde 6' ausgebildet. Die Brillenhalteteile 5 sind auf Brillenohrbügeln 7 des Brillengestells 4 der Brille 2 formschlüssig spannend aufgeschoben. Die Objekthalterungsteile 6 sind an dem jeweiligen Objekt 3 festgeklebt. Das als Elastomer-Formteil 5' ausgebildete Brillenhalteteil 5 ist elastisch und hat sich an die Form des Brillenohrbügels 7 angepasst und liegt somit lagestabil daran an. Es ist nahe einem Verbindungsgelenk 8, an dem die Brillenohrbügeln 7 schwenkbar mit den Gläserfassungen 9 des Brillengestells 4 verbunden sind, angeordnet. Die beiden Objekthalterungsteile 6 sind jeweils mit seitlichem Abstand zueinander an dem Objekt 3 befestigt. Sie liegen den Brillenhalteteile 5 genau gegenüber. In der Figur 1 sind die beiden Objekthalterungsteile 6 an einem Helmschild 10 des Fahrradhelms 3 angebracht und in der Figur 2 an einer Lenkstange 11 des Fahrradlenkers 3. In der Figur 1 stützen sich Gläserfassungen 9 auf dem Helmschild 10 ab, in der Figur 2 auf einem elastischen Stützpolsterteil 12, das auf einem Lenkervorbau 13 des Fahrradlenkers 3 befestigt ist, das die Lenkstange 11 trägt. Das Stützpolsterteil 12 ist mit dem Lenkervorbau 13 verklebt.

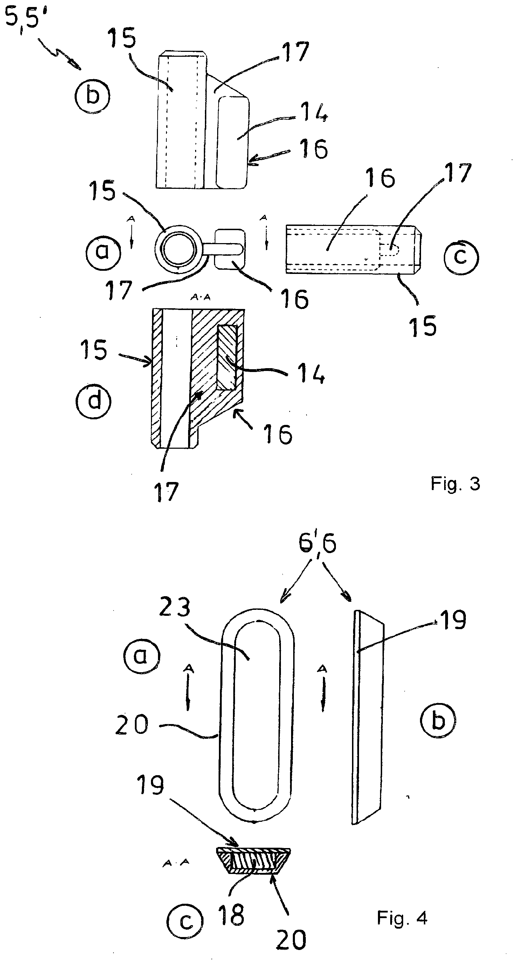

Die Figur 3 veranschaulicht in den Figuren 3a bis 3d eine Ausführungsform des Brillenhalteteils 5, das als Elastomer-Formteile 5' ausgebildet ist. Bei diesem Elastomer-Formteile 5' ist das magnetische Material des Brillenhalteteils 5 zu einem magnetischen Festkörper 14 geformt, der in dem Elastomer-Formteil 5' aufgenommen ist. Der Magnet 14 ist mit einem elastomeren Kunststoffwerkstoff umspritzt. Dabei weist das Brillenhalteteil 5 einen rohrförmigen dehnbaren Aufnahmeabschnitt 15 für den Brillenohrbügel 7 nach Art einer zylindrischen Aufnahmetülle auf und einen quaderförmigen formstabilen Anlageabschnitt 16 für das am Objekt 3 befestigte Objekthalterungsteil 6 auf. In dem Anlageabschnitt 16 ist der Magnet 14 angeordnet. Bei dem Brillenhalteteil 5 sind der Aufnahmeabschnitt 15 und der Anlageabschnitt 16 miteinander über einen dazwischen verlaufenden flexiblen Verbindungsabschnitt 17 einander gegenüber schwenkbar verbunden. Dieser Verbindungsanschnitt 17 ist wesentlich dünner als der Aufnahmeabschnitt 15 und der Anlageabschnitt 16 ausgebildet. Er verbindet den Aufnahmeabschnitt 15 und der Anlageabschnitt 16 flexibel miteinander. Er ist in allen Richtungen elastisch verformbar und kann gedehnt, gestaucht, gekickt, gebogen oder verdreht werden.

Die Figur 4 veranschaulicht in den Figuren 4a bis 4c eine Ausführungsform des Objekthalterungsteils 6, das als flaches Elastomer-Formgebilde 6' ausgebildet ist. Bei diesem Elastomer-Formgebilde 6' ist das magnetische Material des Objekthalterungsteils 6 zu einem streifenförmigen magnetischen Festkörper 18 geformt, der in dem Elastomer-Formteil 6' aufgenommen ist. Der Magnet 18 ist in einer Aufnahmetasche 23 des Objekthalterungsteils 6 eingelegt. Dabei weist das Objekthalterungsteil 6 einen Befestigungsabschnitt 19 für das Objekt 3 auf, in den die Aufnahmetasche 23 als nach außen offenen Ausnehmung ausgebildet ist, und einen Halteabschnitt 20 für das Brillenhalteteil 5 auf, der eben ausgeführt ist.

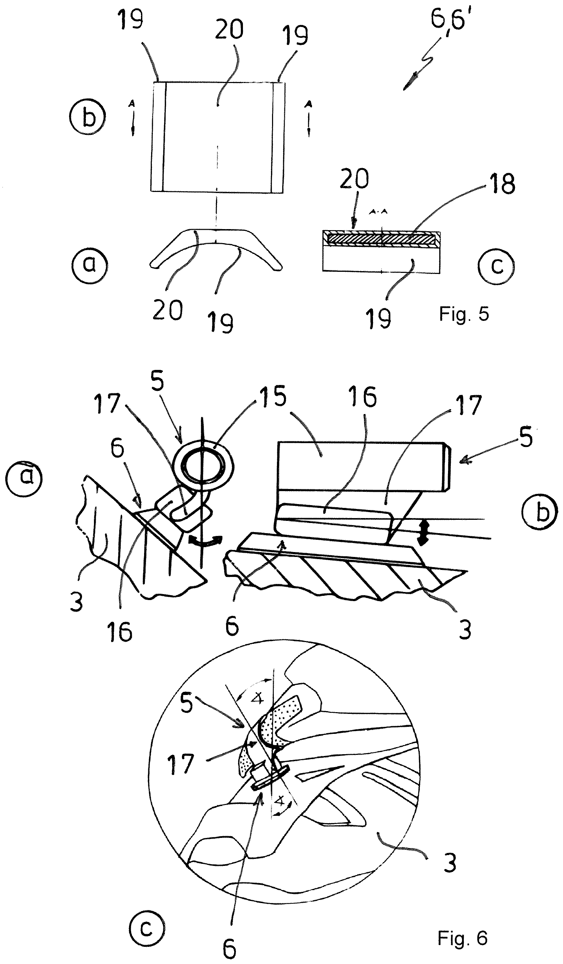

Die Figur 5 veranschaulicht in den Figuren 5a bis 5c eine andere Ausführungsform des Objekthalterungsteile 6, das als dreidimensionales Elastomer-Formgebilde 6' ausgebildet ist. Das Objekthalterungsteil 6 ist in diesen Fall U-förmig ausgebildet. Bei diesem Elastomer-Formgebilde 6' ist das magnetische Material des Objekthalterungsteils 6 zu einem magnetischen Festkörper 18 geformt, der in dem Elastomer-Formteil 6' aufgenommen ist. Der Magnet 18 ist mit einem elastomeren Kunststoffwerkstoff umspritzt. Dabei weist das Objekthalterungsteil 6 einen Befestigungsabschnitt 19 für das Objekt 3 und einen Halteabschnitt 20 für das Brillenhalteteil 5 auf. In dem Halteabschnitt 20 ist der Magnet 18 angeordnet, wobei bei diesem Ausführungsbeispiel des Objekthalterungsteils 6 der Befestigungsabschnitt 19 und der Halteabschnitt 20 starr miteinander verbunden sind.
Die Figur 6 zeigt in den Figuren 6a und 6b und 6C nochmals das Brillenhalteteil 5 und das Objekthalterungsteil 6 verbunden miteinander, wobei diese magnetisch in Anlage aneinander gehaltenen sind. Die Figur 6a verdeutlicht, dass der rohrförmigen Aufnahmeabschnitt 15 für den Brillenohrbügel 7 gegenüber dem quaderförmigen Anlageabschnitt 16 seitlich auslenkbar ist, wobei die Längsmittelachsen des Aufnahmeabschnittes 15 und des Anlageabschnittes 16 parallel zueinander verbleiben. Die Figur 6b veranschaulicht, dass der rohrförmigen Aufnahmeabschnitt 15 gegenüber dem Anlageabschnitt 16 zudem nach oben auslenkbar ist, wobei die Längsmittelachsen des Aufnahmeabschnittes 15 und des Anlageabschnittes 16 ihre Winkellage zueinander verändern. In der Praxis werden in der Regel beiden Auslenkungsarten überlagert sein. Die Figur 6c verdeutlicht dies nochmals. Die Auslenkung in beide Richtungen erfolgt durch eine Deformation des Verbindungsabschnittes 17.

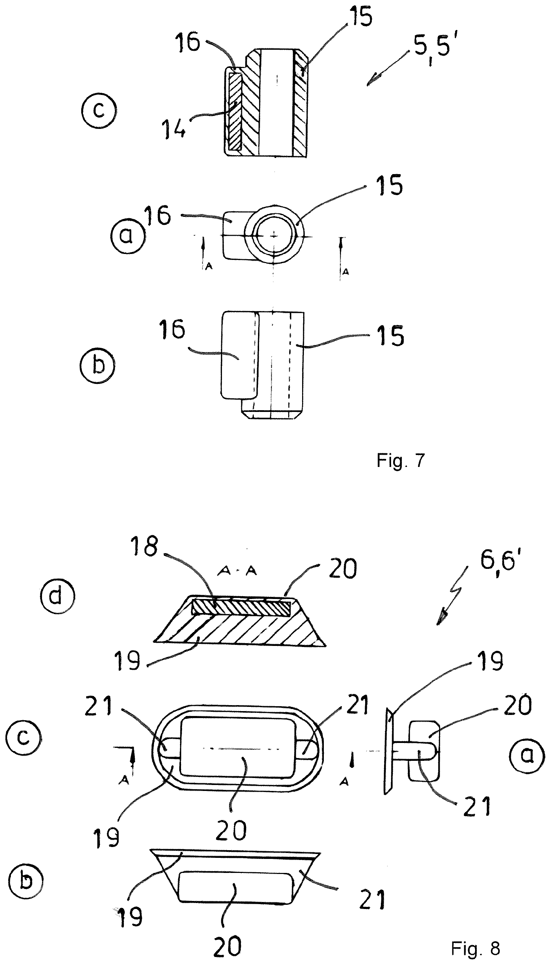

Die Figuren 7a bis 7c zeigen ein nicht erfindungsgemäßes Brillenhalteteil 5, und die Figuren 8a bis 8d ein alternativ ausgebildetes Objekthalterungsteil 6, die miteinander paarbar ausgebildet sind. Bei diesen dort abgebildeten Ausführungsbeispielen ist das Brillenhalteteil 5 ebenfalls als Elastomer-Formteile 5' ausgebildet und das Objekthalterungsteil 6 auch als Elastomer-Formgebilde 6' ausgeführt. Das Brillenhalteteil 5 weist einen rohrförmigen dehnbaren Aufnahmeabschnitt 15 für den Brillenohrbügel 7 und einen quaderförmigen formstabilen Anlageabschnitt 16. Diese sind direkt miteinander biegesteif, vorzugsweise biegestarr verbunden. Es fehlt der beim dem in der Figur 3 dargestellten Ausführungsbeispiel vorhandene flexible Verbindungsabschnitt 17 zwischen dem Aufnahmeabschnitt 15 und dem Anlageabschnitt 16. Das zugeordnete Objekthalterungsteil 6 ist Doppel-T-förmig ausgebildet und weist wie Ausführungsbeispiel einen Befestigungsabschnitt 19 für das Objekt 3 und einen Halteabschnitt 20 für das Brillenhalteteil 5 auf. Der Befestigungsabschnitt 19 und der Halteabschnitt 20 sind über einen flexiblen Verbindungssteg 21 miteinander zueinander schwenkbar verbunden. Der Verbindungsteg 21 entspricht in der Funktion dem Verbindungsabschnitt 17 aus Figur 3. Der Magnet 14 ist auch in diesem Fall in dem Anlageabschnitt 16 des Brillenhalteteils 5 und der Magnet 18 in dem Halteabschnitt 20 des Objekthalterungsteils 6 angeordnet. Der Verbindungssteg 21 ist dünner ausgebildet als der Befestigungsabschnitt 19 und der Halteabschnitt 20, sodass der Befestigungsabschnitt 19 und der Halteabschnitt 20 einander gegenüber schwenkbar verbunden sind. Der Verbindungssteg 21 kann in allen Richtungen elastisch verformt, beispielsweise gedehnt, gestaucht, gekickt, gebogen oder verdreht werden.

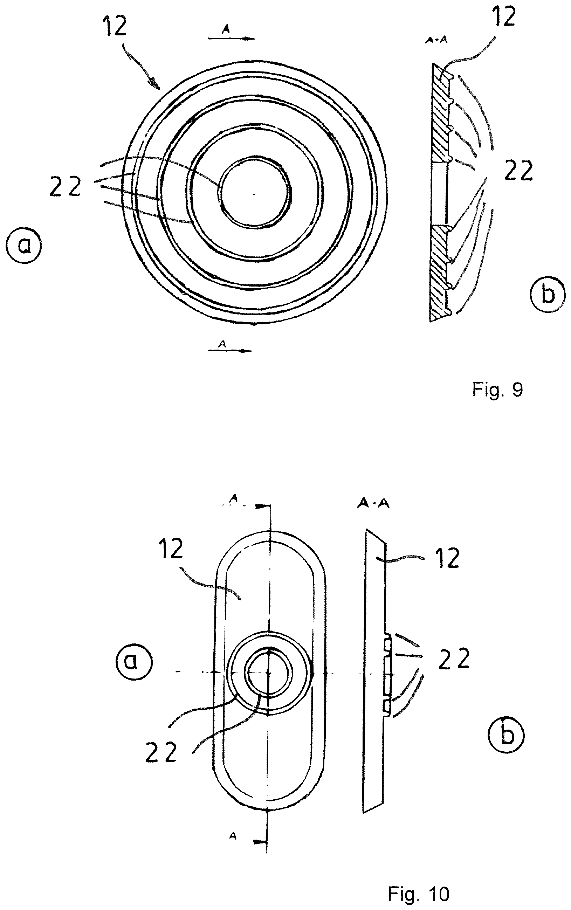

In den Figuren 9a, 9b ist ein Ausführungsbeispiel für ein zusätzliches mit dem Objekt 3 verbindbares elastisches Stützpolsterteil 12 für die Gläserfassung 9 des Brillengestells 4 abgebildet. Daran stützt sich gemäß der Figur 2 die Brille 2 zusätzlich ab und wird so in ihrer Lage stabilisiert. Das Stützpolsterteil 12 ist als Ringscheibe mit einer zentralen Zugangsöffnung zur Gabelkronenschraube des Fahrradlenkers ausgeführt. Sie wird ähnlich dem Objekthalterungsteil 6 vorzugsweise mit dem Lenkervorbau 13 verbunden, beispielsweise dort aufgeklebt. Das Stützpolsterteil 12 ist auch als Elastomer-Teil ausgebildet. Es weist eine Anzahl von in Richtung der Brille vorstehende Anlagenoppen 22 auf.

Die Figuren 10a, 10b zeigen ein weiteres alternativ ausgebildetes elastisches Stützpolsterteil 12, das länglich geformt ist. Daran kann sich die Brille 2 ähnlich dem in der Figur 2 abgebildeten Ausführungsbeispiel zusätzlich abstützen, wenn der Lenkervorbau 13 extrem lang ausgebildet ist und ein rundes Stützpolsterteil 12 ungeeignet ist, um die Brille in Ihrer Lage zu stabilisieren. Das Stützpolsterteil 12 ist als Scheibe mit einer zentralen Aufnahmeöffnung ausgeführt. Sie wird ähnlich dem Objekthalterungsteil 6 vorzugsweise mit dem Lenkervorbau 13 verbunden, beispielsweise dort aufgeklebt. Das Stützpolsterteil 13 ist auch als Elastomer-Teil ausgebildet. Es weist eine Anzahl von in Richtung der Brille vorstehende Anlagenoppen 22 auf. Die Aufnahmeöffnung des Stützpolsterteils 12 als auch die Aufnahmeöffnung des Stützpolsterteils 13 dienen dazu, um den Zugang an die Gabelkronenschraube des jeweiligen Fahrrads zu ermöglichen.

## Patentansprüche

1. Hafthalterung (1) zum temporären Befestigen einer Brille (2) an einem Objekt (3), mit mindestens einem an einem Brillenohrbügel (7) eines Brillengestells (4) anbringbaren Brillenhalteteil (5), das magnetisches und/oder magnetisierbares Material aufweist und das bei einem magnetischen und/oder magnetisierbaren Objekt (3) eine direkte lösbare Fixierung der Brille (2) oder bei einem beliebigen Material des Objektes (3) eine indirekte Fixierung über mindestens ein an dem Objekt (3) befestigbares Objekthalterungsteil (6), das magnetisches und/oder magnetisierbares Material aufweist, ermöglicht, wobei die Materialpaarung derart gewählt ist, dass zwischen dem Brillenhalteteil (5) und dem Objekt (3) oder dem Brillenhalteteil (5) und dem am Objekt (3) befestigten Objekthalterungsteil (6) eine Magnetkraft wirkt, wobei das Brillenhalteteil (5) als Elastomer-Formteil (5') ausgebildet und auf den Brillenohrbügel (7) des Brillengestells (4) spannend aufschiebbar ist und einen rohrförmigen Aufnahmeabschnitt (15) für den Brillenohrbügel (7) und einen formstabilen Anlageabschnitt (16) für das Objekt (3) oder das am Objekt (3) befestigte Objekthalterungsteil (6) aufweist, wobei das magnetische und/oder magnetisierbare Material sich in dem Anlageabschnitt (16) befindet, **dadurch gekennzeichnet, dass** der Aufnahmeabschnitt (15) und der Anlageabschnitt (16) miteinander über einen dazwischen verlaufenden flexiblen Verbindungsabschnitt (17) aus Elastomermaterial einander gegenüber schwenkbar verbunden sind, und der Verbindungsabschnitt (17) dünner als der Aufnahmeabschnitt (15) und der Anlageabschnitt (16) ausgebildet ist.

2. Hafthalterung nach Anspruch 1, **dadurch gekennzeichnet, dass** das magnetische oder magnetisierbare Material des Brillenhalteteils (5) homogen verteilt in dem Anlageabschnitt (16) des Elastomer-Formteils (5') eingebettet ist.

3. Hafthalterung nach Anspruch 1, **dadurch gekennzeichnet, dass** das magnetische oder magnetisierbare Material des Brillenhalteteils (5) zu einem Festkörper (14) geformt ist, der in dem Anlageabschnitt (16) des Elastomer-Formteils (5') aufgenommen ist.

4. Magnet-Set zur Brillenbefestigung an einem beliebigen Objekt (3), **gekennzeichnet durch** mindestens ein Brillenhalteteil (5) nach einem der vorstehenden Ansprüche 1 bis 3 und mindestens ein an dem Objekt (3) befestigbares Objekthalterungsteil (6), das als Elastomer-Formgebilde (5', 6') ausgebildet ist und magnetisches oder magnetisierbares Material derart aufweist, dass zwischen dem Brillenhalteteil (5) und dem Objekthalterungsteil (6) eine Magnetkraft wirkt, die ein lösbares Festlegen der Brille (2) an dem Objekt (3) ermöglicht.

5. Magnet-Set nach Anspruch 4, **dadurch gekennzeichnet, dass** das magnetische oder magnetisierbare Material des Objekthalterungsteils (6) homogen verteilt in das Elastomer-Formgebilde (6') eingebettet ist oder das magnetische oder magnetisierbare Material des Objekthalterungsteils (6) zu einem Festkörper (18) geformt ist, der in dem Elastomer-Formgebilde (6') aufgenommen ist.

6. Magnet-Set nach einem der vorstehenden Ansprüche 4 oder 5, **dadurch gekennzeichnet, dass** das Objekthalterungsteil (6) an dem Objekt (3) festklebbar ist.

7. Magnet-Set nach einem der vorstehenden Ansprüche 4 bis 6, **dadurch gekennzeichnet, dass** das Objekthalterungsteil (6) einen Befestigungsabschnitt (19) für das Objekt (3) und einen Halteabschnitt (20) für das Brillenhalteteil (5) aufweist, wobei das Objekthalterungsteil (6) eben, U-förmig, schalenförmig oder Doppel-T-förmig ausgebildet ist.

8. Magnet-Set nach einem der vorstehenden Ansprüche 4 bis 7, **gekennzeichnet durch** mindestens zwei Brillenhalteteile und mindestens zwei, vorzugsweise zwei oder mehr weitere, identisch oder abweichend ausgebildete, Objekthalterungsteile (6).

9. Magnet-Set nach einem der vorstehenden Ansprüche 4 bis 8, **gekennzeichnet durch** mindestens ein zusätzliches mit dem Objekt (3) verbindbares elastisches Stützpolsterteil (12) für einen Nasenbügel und/oder eine Gläserfassung des Brillengestells (4).

10. Magnet-Set nach einem der vorstehenden Ansprüche 4 bis 9, **dadurch gekennzeichnet, dass** das Elastomer-Formteil (5'), das Elastomer-Formgebilde (6') und/oder das elastische Stützpolsterteil (12) eine typische Shorehärte zwischen 15 und 45 Sha, vorzugsweise von 20 bis 30 Sha, aufweist.

11. Verwendung des Magnet-Sets nach einem der vorstehenden Ansprüche 4 bis 10 zur temporären lösbaren Befestigung einer Brille (2), mit im Gebrauchszustand befindlichen Brillenohrbügeln (7) an einem Fahrradhelm und/oder einem Fahrradlenker ohne Kontakt der Brillengläser mit dem Fahrradhelm bzw. dem Fahrradlenker, wobei die Hafthalterung (1) mindestens je ein an jedem der zwei Brillenohrbügel (7) des Brillengestells (4) anbringbares Brillenhalteteil (5) aufweist.

12. Fahrradhelm, **gekennzeichnet durch** ein Magnet-Set zur Brillenbefestigung nach einem der vorstehenden Ansprüche 4 bis 10.

## Claims

1. Holder support (1) for temporarily fastening spectacles (2) to an object (3), having at least one spectacle holding part (5) which can be mounted on a spectacle temple arm (7) of a spectacle frame (4), which spectacle holding part (5) comprises magnetic and/or magnetisable material, and allows the spectacles (2) to be directly detachably fastened if the object (3) is magnetic and/or magnetisable and indirectly fastened by means of at least one object holder part (6) that can be fastened to the object (3) if the object (3) is made of any material, which object holder part comprises magnetic and/or magnetisable material, the material combination being selected such that a magnetic force acts between the spectacle holding part (5) and the object (3) or between the spectacle holding part (5) and the object holder part (6) fastened to the object (3), the spectacle holding part (5) being designed as an elastomer preform (5'), it being possible to slide the spectacle holding part (5) onto the spectacle temple arm (7) of the spectacle frame (4) in a clamping manner, and the spectacle holding part (5) comprising a tubular receiving portion (15) for the spectacle temple arm (7) and a dimensionally stable contact portion (16) for the object (3) or the object holder part (6) fastened to the object (3), the magnetic and/or magnetisable material being located in the contact portion (16), **characterised in that** the receiving portion (15) and the contact portion (16) are interconnected so as to pivot with respect to each another by a flexible connecting portion (17) made of elastomer material extending therebetween, and the connecting portion (17) is thinner than the receiving portion (15) and the contact portion (16).

2. Holder support according to claim 1, **characterised in that** the magnetic or magnetisable material of the spectacle holding part (5) is embedded in the contact portion (16) of the elastomer preform (5') so as to be homogenously distributed.

3. Holder support according to claim 1, **characterised in that** the magnetic or magnetisable material of the spectacle holding part (5) is shaped so as to form a solid body (14) which is received in the contact portion (16) of the elastomer preform (5').

4. Magnet set for fastening spectacles to any object (3), **characterised by** at least one spectacle holding part (5) according to any of the preceding claims 1 to 3 and at least one object holder part (6) that can be fastened to the object (3), which is designed as an elastomer moulded structure (5', 6') and comprises magnetic or magnetisable material such that a magnetic force acts between the spectacle holding part (5) and the object holder part (6), which magnetic force allows the spectacles (2) to be detachably fixed to the object (3).

5. Magnet set according to claim 4, **characterised in that** the magnetic or magnetisable material of the object holder part (6) is embedded in the elastomer moulded structure (6') so as to be homogenously distributed, or the magnetic or magnetisable material of the object holder part (6) is shaped so as to form a solid body (18) which is received in the elastomer moulded structure (6').

6. Magnet set according to either of the preceding claims 4 or 5, **characterised in that** the object holder part (6) can be stick to the object (3).

7. Magnet set according to any of the preceding claims 4 to 6, **characterised in that** the object holder part (6) comprises a fastening portion (19) for the object (3) and a holding portion (20) for the spectacle holding part (5), the object holder part (6) being planar, U-shaped, bowl-shaped or double-T-shaped.

8. Magnet set according to any of the preceding claims 4 to 7, **characterised by** at least two spectacle holding parts and at least two, preferably two or more, further identical or differently shaped object holder parts (6).

9. Magnet set according to any of the preceding claims 4 to 8, **characterised by** at least one additional elastic support pad part (12) which can be connected to the object (3) and is intended for a nose bridge and/or a lens frame of the spectacle frame (4).

10. Magnet set according to any of the preceding claims 4 to 9, **characterised in that** the elastomer preform (5'), the elastomer moulded structure (6') and/or the elastic support pad part (12) have a typical Shore hardness of between 15 and 45 ShA, preferably from 20 to 30 ShA.

11. Use of the magnet set according to any of the preceding claims 4 to 10 for temporarily detachably fastening spectacles (2) having spectacle temple arms (7) in the use position to a cycle helmet and/or to a bicycle handlebar in such a way that the spectacle lenses do not contact the cycle helmet or the bicycle handlebar, the holder support (1) having at least one spectacle holding part (5) that can be mounted on each of the two spectacle temple arms (7) of the spectacle frame (4).

12. Cycle helmet, **characterised by** a magnet set for fastening spectacles according to any of the preceding claims 4 to 10.

## Revendications

1. Dispositif (1) de retenue par adhérence, dévolu à la fixation provisoire d'une paire de lunettes (2) à un objet (3) et muni d'au moins une partie (5) de maintien des lunettes qui peut être mise en place sur une branche (7) d'une monture (4) de lunettes, comporte un matériau magnétique et/ou magnétisable, et permet un blocage à demeure direct et libérable de la paire de lunettes (2) en présence d'un objet (3) magnétique et/ou magnétisable, ou bien, en présence d'un quelconque matériau dudit objet (3), un blocage à demeure indirect par l'intermédiaire d'au moins une partie (6) de maintien de l'objet qui peut être fixée audit objet (3) et comporte un matériau magnétique et/ou magnétisable, l'appariement de matériaux étant sélectionné de telle sorte qu'une force magnétique agisse entre la partie (5) de maintien des lunettes et l'objet (3), ou entre ladite partie (5) de maintien des lunettes et la partie (6) de maintien de l'objet, fixée audit objet (3), sachant que ladite partie (5) de maintien des lunettes est réalisée sous la forme d'une pièce moulée (5') en élastomère, peut être enfilée avec effet de serrage sur la branche (7) de la monture (4) des lunettes, et est pourvue d'une zone tubulaire de réception (15) dédiée à ladite branche (7) de lunettes et d'une zone d'appui (16) de forme stable, dédiée à l'objet (3) ou à la partie (6) de maintien de l'objet, fixée audit objet (3), ledit matériau magnétique et/ou magnétisable étant situé dans ladite zone d'appui (16), **caractérisé par le fait que** la zone de réception (15) et la zone d'appui (16) sont reliées l'une à l'autre, avec faculté de pivotement mutuel, par l'intermédiaire d'une zone de liaison (17) en un matériau élastomère, douée de flexibilité et occupant un emplacement intercalaire, ladite zone de liaison (17) étant réalisée plus mince que ladite zone de réception (15) et ladite zone d'appui (16).

2. Dispositif de retenue par adhérence selon la revendication 1, **caractérisé par le fait que** le matériau magnétique ou magnétisable, constituant la partie (5) de maintien des lunettes, est intégré avec répartition homogène dans la zone d'appui (16) de la pièce moulée (5') en élastomère.

3. Dispositif de retenue par adhérence selon la revendication 1, **caractérisé par le fait que** le matériau magnétique ou magnétisable est amené à la forme d'un corps solide (14) logé dans la zone d'appui (16) de la pièce moulée (5') en élastomère.

4. Ensemble magnétique pour la fixation de lunettes à un objet quelconque (3), **caractérisé par** au moins une partie (5) de maintien des lunettes, conforme à l'une des revendications 1 à 3 précédentes, et par au moins une partie (6) de maintien de l'objet qui peut être fixée audit objet (3), ledit ensemble étant réalisé en tant que structure (5', 6') venue de moulage en élastomère et comportant un matériau magnétique ou magnétisable, de façon telle qu'une force magnétique, permettant un blocage à demeure libérable de la paire de lunettes (2) sur l'objet (3), agisse entre ladite partie (5) de maintien des lunettes et ladite partie (6) de maintien de l'objet.

5. Ensemble magnétique selon la revendication 4, **caractérisé par le fait que** le matériau magnétique ou magnétisable, constituant la partie (6) de maintien de l'objet, est intégré avec répartition homogène dans la structure (6') venue de moulage en élastomère, ou bien ledit matériau magnétique ou magnétisable, constituant ladite partie (6) de maintien de l'objet, est amené à la forme d'un corps solide (18) logé dans ladite structure (6') venue de moulage en élastomère.

6. Ensemble magnétique selon l'une des revendications 4 ou 5 précédentes, **caractérisé par le fait que** la partie (6) de maintien de l'objet peut être assujettie audit objet (3) par collage.

7. Ensemble magnétique selon l'une des revendications 4 à 6 précédentes, **caractérisé par le fait que** la partie (6) de maintien de l'objet comprend une zone de fixation (19) dédiée audit objet (3) et une zone de retenue (20) dédiée à la partie (5) de maintien des lunettes, ladite partie (6) de maintien de l'objet étant de réalisation plane, configurée en U, en forme d'écuelle ou en forme de double T.

8. Ensemble magnétique selon l'une des revendications 4 à 7 précédentes, **caractérisé par** au moins deux parties de maintien des lunettes et par au moins deux, de préférence deux ou plus de deux parties supplémentaires (6) de maintien de l'objet, de réalisations identiques ou différentes.

9. Ensemble magnétique selon l'une des revendications 4 à 8 précédentes, **caractérisé par** au moins une partie additionnelle élastique (12) de soutien rembourré, pouvant être reliée à l'objet (3) et destinée à un pont et/ou à un encadrement des verres de la monture (4) des lunettes.

10. Ensemble magnétique selon l'une des revendications 4 à 9 précédentes, **caractérisé par le fait que** la pièce moulée (5') en élastomère, la structure (6') venue de moulage en élastomère et/ou la partie élastique (12) de soutien rembourré présente(nt) une dureté Shore A typique comprise entre 15 et 45, mesurant préférentiellement de 20 à 30.

11. Utilisation de l'ensemble magnétique conforme à l'une des revendications 4 à 10 précédentes, dévolu à la fixation provisoire et libérable d'une paire de lunettes (2) munie de branches (7) qui sont respectivement disposées, en condition d'utilisation, sur un casque de bicyclette et/ou sur un guidon de bicyclette, sans aucun contact respectif des verres des lunettes avec ledit casque de bicyclette ou ledit guidon de bicyclette, le dispositif (1) de retenue par adhérence étant pourvu, à chaque fois, d'au moins une partie (5) de maintien des lunettes qui peut être mise en place sur chacune des deux branches (7) de la monture (4) desdites lunettes.

12. Casque de bicyclette, **caractérisé par** un ensemble magnétique conforme à l'une des revendications 4 à 10 précédentes, dévolu à la fixation de lunettes.
